# EUROPEAN PATENT APPLICATION

(11) **EP 3 972 355 A1**
(43) Date of publication of application: **23.03.2022**
(21) Application number: 20197370.8
(22) Date of filing: 22.09.2020
(51) Int. Cl.: H04W 52/24, H04W 72/04, H04W 84/12, H04W 88/10

(54) **A METHOD FOR REGULATING TRANSMISSION OF A PLURALITY OF INDUSTRIAL DEVICES**

(71) Applicant: Siemens Aktiengesellschaft, 80333 München (DE)
(72) Inventor: Lampe, Mattias, Beijing, 100102 (CN); Meyer, Martin, 90425 Nürnberg (DE); Richter, Siegfried, 91207 Lauf (DE); Sinn, Ulrich, 91056 Erlangen (DE); Weiler, Christoph, 75015 Bretten (DE)

(57) **Abstract**

The current disclosure describes a method for regulating transmission of a plurality of industrial devices in a first section of an industrial facility. The method comprises measuring radio signal strength at a first location in the first section and comparing the measured radio signal strength against a predefined threshold associated with the first location in the first section. The radio signal strength is associated with one or more signals transmitted by at least one industrial device of a first wireless network in the first section. The comparison of the measured radio strength against the predefined threshold is performed for transmitting a message to the industrial device. Based on the message, the at least one industrial device is configured to adjust at least one transmission parameter of the industrial device.

## Description

The current disclosure relates to wireless communication in industrial automation environments and more specifically, to mobile wireless communication devices in industrial facilities. With increasing implementation of industrial internet of things and other Industry 4.0 concepts in factories, plants and other industrial facilities, a plurality of assets in these facilities will be connected wirelessly. Several wireless networks and technologies such as cellular networks, local area networks, short range communication techniques such as Bluetooth, Near Field Communication, etc., may be utilized in enabling wireless communication.

Currently, with the introduction of 5G Private Networks, industrial enterprises have the option to deploy private cellular networks within their facilities to complement existing wireless communication infrastructure. Such deployment can improve security, coverage, performance, etc. However, frequencies for use in these private networks are regulated by governmental agencies and have to applied for. For example, the use of the frequency range 3700 MHz - 3800 MHz in Germany is regulated and an application for license of these frequencies must be submitted by the industrial enterprise. The application must specify, among other things, the geographical area in which the private network would operate and frequencies which would be used by the private network.

While making the application, the industrial enterprise (also referred to as the licensee) must draw up a frequency spectrum usage concept and indicate the measures for ensure efficient use of spectrum in terms of compliance with interference ranges. Accordingly, the industrial enterprise is required to provide a description of interference mitigation techniques, e.g. information on the antennas used in terms of type, shielding measures, etc.

While the use of such interference mitigation techniques is well known with regards to stationary device, these are not easily applicable to mobile devices such as automated guided vehicles. In industrial applications, mobile stations are also desirable, for example at Automated Guided Vehicles (AGV). These mobile devices can travel within buildings where high transmission power is required. However, due to this mobile operation, the mobile devices may also travel along the border of the proposed licensed area. While operating in such areas, it is likely that these mobile devices may cause disruption in neighboring networks which may belong to other licensees. Accordingly, there is a need for a device and a method which addresses the above mentioned issues.

Accordingly, the current disclosure describes a method according to claim 1, a border assistance device accordingly to claim 4, a network management device according to claim 8 and non-transitory storage medium according to claim 9 which addresses the above-mentioned aspects.

Accordingly, the current disclosure describes a method for regulating transmission of a plurality of industrial devices in a first section of an industrial facility. The method comprises measuring radio signal strength at a first location in the first section and comparing the measured radio signal strength against a predefined threshold associated with the first location in the first section. The radio signal strength is associated with one or more signals transmitted by at least one industrial device of a first wireless network in the first section. The comparison of the measured radio strength against the predefined threshold is performed for transmitting a message to the industrial device. Based on the message, the at least one industrial device is configured to adjust at least one transmission parameter of the industrial device.

Accordingly, the current disclosure describes a method for regulating transmission of industrial devices including mobile devices such as automated guidance vehicles, for reducing interference in neighboring sections and wireless networks. Since the regulation of transmission power is based on location, industrial devices within radio proximity of a neighboring network can be advised to reduce their transmission power or change their transmission pattern such that transmission from the industrial device does not cause significant interference in the neighboring network. Accordingly, performance of the above mentioned method would mitigate substantial interference and result in effective utilization of licensed frequencies in private networks.
In an example, the industrial facility further includes a second section comprising a second wireless network. In an example, the at least one transmission parameter includes one of transmission power and transmission pattern.

In another aspect, the current disclosure describes a border assistance device for regulating transmission of a plurality of industrial devices in a first section of an industrial facility. The border assistance device is affixed to a first location in the first section of the industrial facility. The border assistance device comprises a network interface comprising a first radio interface associated with a first radio technology and a second radio interface associated with a second radio technology; and one or more processors connected to a memory module. The one or more processors are configured to measure radio signal strength at the first location in the first section using the first radio interface, wherein the radio signal strength is associated with one or more signals transmitted by at least one industrial device of a first wireless network in the first section, the first wireless network associated with the first radio technology, compare the measured radio signal strength against a predefined threshold associated with the first location in the first section, and transmit a message using the second radio interface, wherein the message is indicative of the comparison of the measured radio signal strength against the predefined threshold.

In an example, the first radio technology is associated with a first set of frequencies and the second radio technology is associated with a second set of frequencies, wherein the first set of frequencies is distinct from the second set of frequencies.

In an example, the first radio interface is configured to receive one or more frames from the at least one industrial device for measuring the radio signal strength, each frame from the one of frames comprises an identifier associated with the at least one industrial device.

In an example, the one or more processors of the border assistance device are configured to detect an interference from at least one device of the second wireless network.
In another aspect, the current disclosure describes a network management device for regulating transmission of a plurality of industrial devices in a first section of an industrial facility, the first section comprising one or more border assistance devices affixed at one or more locations in the first section. The network management device comprises a network interface comprising a first radio interface associated with a first radio technology and a second radio interface associated with a second radio technology, one or more processors connected to a memory module. The one or more processors are configured to receive at least one message from at least one border assistance device affixed at a first location, using the second radio interface, wherein the at least one message is indicative of a comparison of a measured radio signal strength at the first location against a predefined threshold associated with the first location, wherein the measured radio signal strength is associated with one or more signals transmitted by at least one industrial device associated with the first radio technology, in the first section, and determine a transmission parameter modification for the at least one industrial device based on the at least one message, and transmit a message to the at least one industrial device using the first radio interface, the message including the determined transmission parameter modification, wherein the at least one industrial device is configured to adjust at least one transmission parameter of the industrial device based on the message.

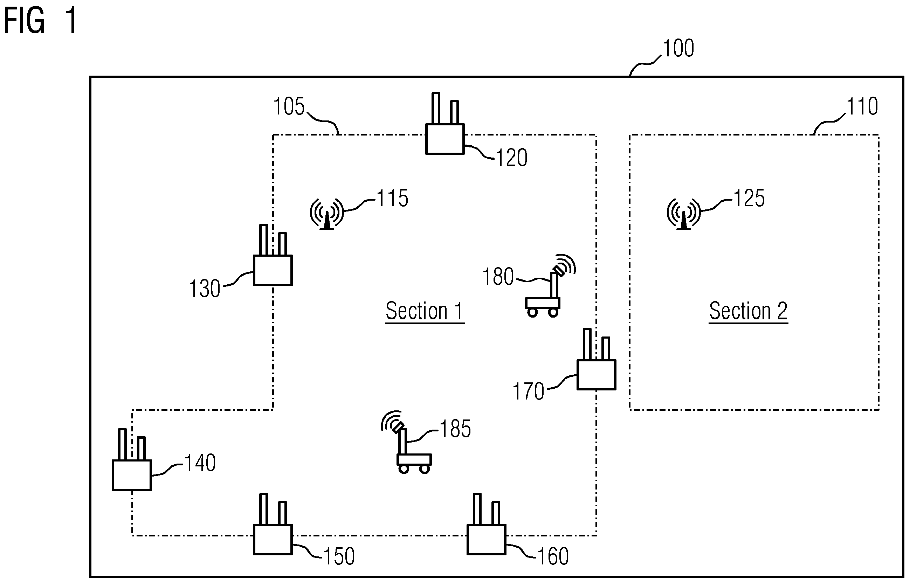

In yet another aspect, the current disclosure describes a non transitory storage medium for regulating transmission of a plurality of industrial devices in a first section of an industrial facility. The non transitory storage medium comprises a plurality of instructions which when executed on one or more processors, cause the one or more processors to measure radio signal strength at a first location in the first section, wherein the radio signal strength is associated with one or more signals transmitted by at least one industrial device of a first wireless network in the first section, the first wireless network associated with the first radio technology, compare the measured radio signal strength against a predefined threshold associated with the first location in the first section; and transmit a message indicative of the comparison of the measured radio signal strength against the predefined threshold to one of a network management device and the at least one industrial device. The advantages of the method apply to the devices and the non transitory storage medium described herein. These aspects are further described in relation figures 1-4.

The following detailed description references the drawings, wherein:
Figure 1 illustrates an example industrial facility with two sections;
Figure 2 illustrates an example method of regulating transmission of a plurality of industrial devices;
Figure 3 illustrates an example border assistance device for regulating transmission of the plurality of industrial devices; and
Figure 4 illustrates an example network management device for regulating transmission of the plurality of industrial devices.

Figure 1 illustrates an industrial facility 100. Industrial facility herein refers to any environment where one or more industrial processes such as manufacturing, refining, smelting, assembly of equipment may take place and includes process plants, oil refineries, automobile factories, etc. The industrial facility 100 includes a plurality of industrial devices including control devices, field devices, mobile devices, operator stations, etc. The control devices include process controllers, programmable logic controllers, supervisory controllers, automated guided vehicles, robots, operator devices, etc. One or more control devices are connected to a plurality of field devices (not shown in figure) such as actuators and sensor devices for monitoring and controlling industrial processes in the industrial facility 100. These field devices can include flowmeters, value actuators, temperature sensors, pressure sensors, etc. Additionally, the industrial facility 100 includes a plurality of mobile devices including one or more robots for performing a plurality of operations such as welding, assembly of parts; one or more autonomous guided vehicles for transportation and handling of material, one or more assets with RFID tags on conveyor belts, etc., in the industrial facility 100. Additionally, the industrial facility 100 may include an operator station for displaying the status of the industrial facility 100 to an operator and for allowing the operator to define KPIs for the control of the industrial processes in the facility. All the industrial devices may be connected to each other via a plant network (realized via wired and wireless technologies).

Communication in the above mentioned plant network happens through wired and wireless means or technologies. Accordingly, the industrial facility 100 includes a plurality of sections (shown in the figure as a first section 105 and a second section 110). Each section may include a wireless sub-network based on a particular radio configuration and a plurality of network devices connected to the wireless sub-network. Radio configuration herein refers to one or more transmission and reception parameters used by the radios of network devices. Radio configuration herein includes frequency bands used as carrier frequencies, maximum transmission power to be used, antenna characteristics, etc. In an example, the first section includes a wireless sub-network (also referred to as first wireless network) based on 5G private network and utilizes one or more frequencies from the licensed frequency spectrum. The second section includes a wireless sub-network (also referred to second wireless network or neighboring network) which may be based on WLAN or other such radio technologies which have frequencies similar to the first wireless network.

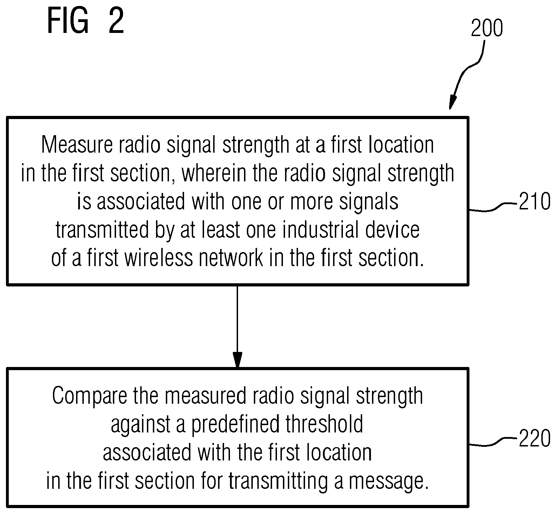

The plurality of network devices includes a plurality of industrial gateway devices (also referred to as gateway devices) and a plurality of user devices. Gateway devices herein refers to one or more network devices capable of connecting the user devices to the wireless network. Examples of gateway devices include base stations, routers, switches, relays, access points, etc. The plurality of gateway devices may include stationary gateway devices which may be affixed to a plurality of locations in the industrial facility, and mobile gateway devices which are capable of moving about the sections to provide appropriate network connectivity. For example, as shown in figure 1, the first section 105 contains a stationary gateway device 115 connected to the first wireless network and similarly, the second section 110 contains a stationary gateway device 125 connected to the second wireless network. The plurality of the user devices in the facility are connected to one or more industrial gateway devices to connect to the wireless sub-network of the corresponding section and for communicating information with the other devices and systems in the industrial facility. Additionally, the first section 110 additionally includes a plurality of border assistance devices (shown in the figure as border assistance devices 120, 130,140, 150, 160 and 170). Each border assistance device may be affixed at a location proximate to a border of the first section. Each border assistance device is configured to measure signal strength at the corresponding location at which it is installed. Based on the signal strength measurement, the border assistance devices help in regulation of transmission of the industrial devices in the first section 105 to ensure that the transmission does not cause significant interference in the second section 110. This is further explained in the description of figure 2.

It may be noted by a person skilled in the art, that while the above mentioned industrial facility is described with two sections, a plurality of sections may be present in the industrial facility. Each section may be associated with one or more buildings within the industrial facility. It may be understood by a person skilled in the art that section herein could refer to a logical grouping of buildings or facilities which use the same wireless network. Additionally, it may be noted that the second section may be not physically contained in enclosure along with the first section, while still being within the radio proximity of the first section. It may be noted that two (or more) sections are located in two co-located industrial sub-facilities, which could be controlled or owned by two different corporate entities or two different control systems.

Figure 2 illustrates a method 200 for regulating the transmission of plurality of industrial devices in the first section 105 of the industrial facility 100. In an example, the method 200 is performed by an example border assistance device 170. The border assistance device 170 is affixed at a first location along the border of the first section 105. The example is explained in relation to an industrial device 180 which is capable of moving about the first section in the industrial facility. The industrial device 180 is capable of changing its transmission parameters to mitigate interference in neighboring sections (i.e. section 120) due to its radio operations, especially along the borders of the first section 110.

At step 210, the border assistance device 170 measures radio signal strength at the first location in the first section 105. The radio signal strength is associated with one or more signals transmitted by the industrial device 180. In an example, the border assistance device 170 receives one or more frames from the industrial device 180. Each frame includes an identifier associated with the industrial device 180. Accordingly, based on the received frames, the border assistance device 170 is able to identify the source of the received frames i.e. the industrial device 180. Then, based on the received frames, the border assistance device is able to determine the radio signal strength, associated with the industrial device 180, at the first location.

Then, at step 220, the border assistance device 170 compares the measured radio signal strength against a predefined threshold associated with the first location in the first section. In an example, the comparison is done in coordination with a network management device. For example, the border assistance device 170 transmits the measurements of the radio signal strength to the network management device which compares the measurements to the predefined threshold. In an example, the predefined threshold is set in the border assistance device 170 during the installation or commissioning of the border assistance device 170. A measurement of signal strength is taken prior to the installation of the border assistance device 170 and used to determine the predefined threshold. The comparison is performed to evaluate is the measured radio signal strength is below or above the predefined threshold.

In an example, when the measured radio signal strength is below the predefined threshold, the border assistance device 170 determines that the transmission of the industrial device 180 is unlikely to cause significant interference outside the first section 105. In another example, when the measured radio strength is above the predefined threshold, the border assistance device 170 can transmit a message to the industrial device, indicating the comparison to the industrial device 180. Accordingly, upon receiving such a message, the industrial device 180 is configured to adjust at least one transmission parameter of the industrial device based on the message, to reduce signal strength at the first location. Transmission parameter herein refers any radio parameter which impacts the transmission profile of the industrial device. Examples of transmission parameters includes transmission power, transmission pattern, transmission carrier frequencies, etc. Continuing the above example, when the message indicates that the radio signal strength due to the industrial device 180 is above the predefined threshold, the industrial device 180 adjusts the transmission power. The industrial device 180 reduces the transmission power based on a predetermined value. In another example, the industrial device 180 switches from an omnidirectional transmission pattern to a directional transmission pattern based on the message.

In another example, when the measured radio strength is above the predefined threshold, the border assistance device 170 can transmit a message to a network management device (not shown in figure) indicating the comparison. The network management device is responsible for managing communications in the first wireless network in the first network. Accordingly, upon receiving such a message, the network management device is configured to determine an adjust at least one transmission parameter of the industrial device 180 based on the message, to reduce signal strength at the first location. Subsequent to the determination of the adjustment, the network management device transmits an instruction to the industrial device 180 to implement the adjustment to the at least one transmission parameter. Continuing the above example, when the message from the border assistance device 170 indicates that the radio signal strength due to the industrial device 180 is above the predefined threshold, the network management device determines an adjustment to the transmission power of the industrial device 180 and instructs the industrial device to change its transmission power based on the determined adjustment by sending an instruction. The industrial device 180 reduces the transmission power based on the instruction from the network management device.

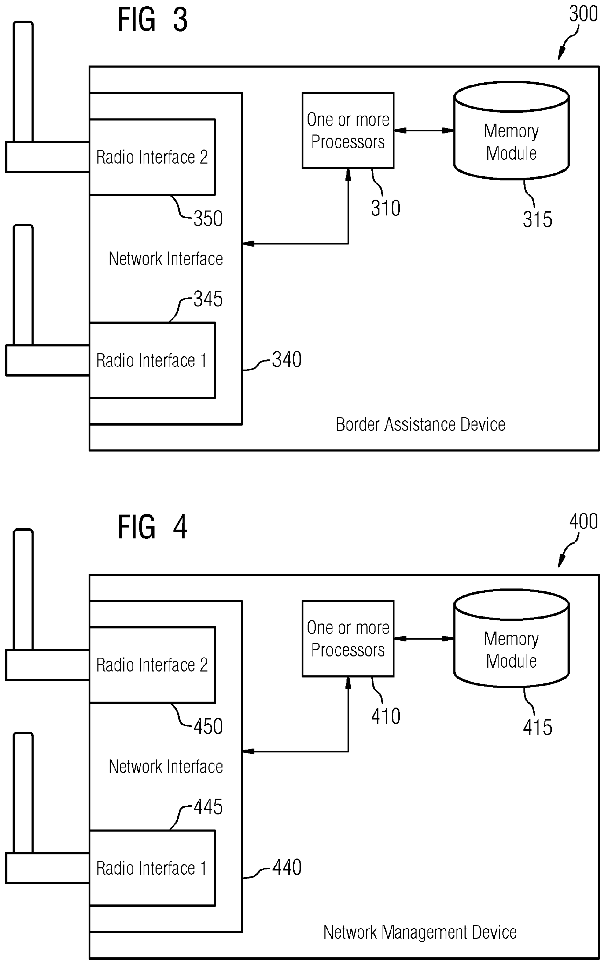

In an example, the border assistance device 170 is equipped with two or more radio interfaces. Accordingly, the border assistance device 170 can use a first radio interface to measure the radio signal strength at the first location and a second radio interface to send messages indicative of the comparison of the measured signal strength and the predefined threshold associated with the first location. By using two separate interfaces, the border assistance device 170 does not cause interference in the first wireless network due to its operations. Additionally, the border assistance device 170 is not impacted by interference in the first wireless network. These aspects are further described in the description of figure 3.

Figure 3 illustrates an example border assistance device 300 for regulating transmission of the plurality of industrial devices. The border assistance device 300 is configured for regulating transmission of industrial devices in the first section 105 as described above. As mentioned previously, the border assistance device 300 is affixed to the first location in the first section of the industrial facility.

The border assistance device comprises a network interface 340. The network interface 340 includes a first radio interface 345 associated with a first radio technology and a second radio interface 350 associated with a second radio technology. The first radio technology is the same radio technology as the one that used by the industrial devices (of the first wireless network). For example, the first radio technology is based on 5G private network using frequencies between 3000-4000 MHz. The second radio technology is different from the first radio technology and is used by the border assistance device 300 to transmit and receive messages. For example, the radio technology is based on wireless LAN and uses 2.4GHz frequency. Additionally, the border assistance device 300 includes one or more processors 310 connected to a memory module 315 (also referred to as non transitory storage medium).

The memory module 315 include a plurality of instructions which when executed by the one or more processors 310, cause the one or more processors 310 to measure radio signal strength at the first location in the first section 105 using the first radio interface 345, compare the measured radio signal strength against a predefined threshold associated with the first location in the first section 105; and transmit a message using the second radio interface 350 as explained above in the method 200. The message is indicative of the comparison of the measured radio signal strength against the predefined threshold. As mentioned previously, in an example, the message is transmitted to a network management device. This is further explained in reference to figure 4.

Figure 4 illustrates an example network management device 400 for regulating transmission of the plurality of industrial devices in the first section 105. The network management device 400 is configured to regulate transmission of a plurality of industrial devices in the first section 105 of the industrial facility 100. As shown in the figure 1, the first section 105 comprises one or more border assistance devices (120, 130, 140, 150, 160, 170) affixed at one or more locations in the first section 105. The one or more border assistance devices are capable of transmitting messages to the network management device 400 for regulating the transmission of the industrial devices.

The network management device 400 includes a network interface 440 comprising a first radio interface 445 associated with the first radio technology and a second radio interface 450 associated with the second radio technology. The network management device 400 is capable of communicating with the industrial devices in the first section 105 via the first radio interface 445. Similarly, the network management device 400 is capable of communicating with the border assistance devices in the first section 105 via the second radio interface 450. Additionally, the network management device 400 includes one or more processors 410 connected to a memory module 415. The memory module 415 includes a plurality of instructions which when executed by the one or more processors 410, cause the one or more processors 410 to receive at least one message from at least one border assistance device affixed at a first location, using the second radio interface 450. The at least one message is indicative of a comparison of a measured radio signal strength at the first location against a predefined threshold associated with the first location, wherein the measured radio signal strength is associated with one or more signals transmitted by at least one industrial device associated with the first radio technology, in the first section. Then, the one or more processors 410 determine a transmission parameter modification for the at least one industrial device based on the at least one message. In an example, the at least one message includes the identifier associated with the at least one industrial device. Then, the one or more processors 410 transmit a message to the at least one industrial device using the first radio interface 445. The message includes the determined transmission parameter modification, wherein the at least one industrial device is configured to adjust at least one transmission parameter of the industrial device based on the message.

In an example, each border assistance device is capable of detecting interference caused by neighboring networks in the first section 105. For example, if the operations of the second wireless network in the second section 110 are causing interference in the first section 105, the border assistance devices adjacent to the section 110 can detect this interference. Accordingly, the border assistance devices can inform the network management device about the interference originating from the neighboring networks.

In an example, a border assistance device is coupled to a gateway device and accordingly, the functionality of the border assistance device and gateway device may be performed by a single device. In another example, a border assistance device may be installed on an automated guidance vehicle and can be portable or mobile. Accordingly, such a border assistance device can be used in a location selected by the network management device.

The present disclosure can take a form of a computer program product comprising computer-usable or computer-readable medium storing program code for use by or in connection with one or more computers, processing units, or instruction execution system. For example, the method 200 may be realized in a single device or across one or more devices.

Accordingly, the current disclosure describes a non-transitory storage medium for regulating transmission of a plurality of industrial devices in the first section of the industrial facility. The non transitory storage medium comprises a plurality of instructions which when executed on one or more processors, cause the one or more processors to measure radio signal strength at a first location in the first section, compare the measured radio signal strength against a predefined threshold associated with the first location in the first section; and transmit a message indicative of the comparison of the measured radio signal strength against the predefined threshold to one of a network management device and the at least one industrial device. The radio signal strength is associated with one or more signals transmitted by at least one industrial device of a first wireless network in the first section, the first wireless network associated with the first radio technology.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) for regulating transmission of a plurality of industrial devices in a first section (105) of an industrial facility (100), the method (200) comprising:
a. Measuring (210) radio signal strength at a first location in the first section (105), wherein the radio signal strength is associated with one or more signals transmitted by at least one industrial device (180) of a first wireless network in the first section (105); and
b. Comparing (220) the measured radio signal strength against a predefined threshold associated with the first location in the first section (105) for transmitting a message;
wherein the at least one industrial device (180) is configured to adjust at least one transmission parameter of the at least one industrial device (180) based on the message.

2. The method (200) as claimed in claim 1, wherein the industrial facility (100) further includes a second section (110) comprising a second wireless network.

3. The method (200) as claimed in claim 1, wherein the at least one transmission parameter includes one of transmission power and transmission pattern.

4. A border assistance device (300) for regulating transmission of a plurality of industrial devices in a first section (105) of an industrial facility (100), the border assistance device (300) affixed to a first location in the first section (105) of the industrial facility (100), the border assistance device (300) comprising:
a. a network interface (340) comprising a first radio interface (345) associated with a first radio technology and a second radio interface (350) associated with a second radio technology; and
b. one or more processors (310) connected to a memory module (315), the one or more processors (310) configured to:
i. measure radio signal strength at the first location in the first section (105) using the first radio interface (345), wherein the radio signal strength is associated with one or more signals transmitted by at least one industrial device (180) of a first wireless network in the first section (105), the first wireless network associated with the first radio technology;
ii. compare the measured radio signal strength against a predefined threshold associated with the first location in the first section (105); and
iii. transmit a message using the second radio interface (450), wherein the message is indicative of the comparison of the measured radio signal strength against the predefined threshold.

5. The border assistance device (300) as claimed in claim 4 wherein the first radio technology is associated with a first set of frequencies and the second radio technology is associated with a second set of frequencies, wherein the first set of frequencies is distinct from the second set of frequencies.

6. The border assistance device (300) as claimed in claim 4, wherein the first radio interface (345) is configured to receive one or more frames from the at least one industrial device (180) for measuring the radio signal strength, each frame from the one of frames comprises an identifier associated with the at least one industrial device (180).

7. The border assistance device (300) as claimed in claim 5, wherein the industrial facility (100) further includes a second section (110) comprising a second wireless network and wherein the one or more processors (310) of the border assistance device (300) are configured to detect an interference from at least one device of the second wireless network.

8. A network management device (400) for regulating transmission of a plurality of industrial devices in a first section (105) of an industrial facility (100), the first section (105) comprising one or more border assistance devices (120, 130, 140, 150, 160 and 170) affixed at one or more locations in the first section (105), the network management device (400) comprising:
a. a network interface (440) comprising a first radio interface (445) associated with a first radio technology and a second radio interface (450) associated with a second radio technology;
b. one or more processors (410) connected to a memory module (415), the one or more processors (410) configured to:
i. receive at least one message from at least one border assistance device (170) affixed at a first location, using the second radio interface (450), wherein the at least one message is indicative of a comparison of a measured radio signal strength at the first location against a predefined threshold associated with the first location, wherein the measured radio signal strength is associated with one or more signals transmitted by at least one industrial device (180) associated with the first radio technology, in the first section (105); and
ii. determine a transmission parameter modification for the at least one industrial device (180) based on the at least one message; and
iii. transmit a message to the at least one industrial device (180) using the first radio interface (445), the message including the determined transmission parameter modification, wherein the at least one industrial device (180) is configured to adjust at least one transmission parameter of the industrial device (180) based on the message.

9. A non transitory storage medium (315) for regulating transmission of a plurality of industrial devices in a first section (105) of an industrial facility (100), the non transitory storage medium (315) comprising a plurality of instructions which when executed on one or more processors (310), cause the one or more processors (310) to:
a. measure radio signal strength at a first location in the first section (105), wherein the radio signal strength is associated with one or more signals transmitted by at least one industrial device (180) of a first wireless network in the first section (105), the first wireless network associated with the first radio technology;
b. compare the measured radio signal strength against a predefined threshold associated with the first location in the first section (105); and
c. transmit a message indicative of the comparison of the measured radio signal strength against the predefined threshold to one of a network management device (400) and the at least one industrial device (180) .
